# EUROPÄISCHE PATENTSCHRIFT

(11) **EP 1 845 501 B1**
(45) Veröffentlichungstag und Bekanntmachung des Hinweises auf die Patenterteilung: **18.01.2017**
(21) Anmeldenummer: 07001439.4
(22) Anmeldetag: 24.01.2007
(51) Int. Cl.: G08C 19/00, G01D 3/02, G01D 3/08

(54) **Messsystem mit mindestens einer Sensorleitung**
Measuring system with at least one sensor cable
Système de mesure doté d'au moins un conducteur de détection

(30) Priorität: 12.04.2006 DE 202006006134 U
(43) Veröffentlichungstag der Anmeldung: 17.10.2007
(73) Patentinhaber: Dr. Johannes Heidenhain GmbH, 83301 Traunreut (DE)
(72) Erfinder: Huber, Alois, 83365 Nußdorf/Sondermoning (DE)

(56) Entgegenhaltungen:
- EP-A2- 0 324 067
- DE-C1- 19 711 216
- US-A- 5 355 129
- US-A- 6 043 768
- US-A- 6 114 947
- US-B1- 6 343 498

## Beschreibung

Die Erfindung betrifft ein Messsystem zur Erfassung mindestens eines Messsignals nach dem Oberbegriff des Anspruchs 1.

Ein derartiges Messsystem weist mindestens eine Sensorleitung auf, die als Fühlleitung einen Zustand des Messsystems, beispielsweise einen Spannungswert an einem Knotenpunkt einer Platine oder die Versorgungsspannung an einer Versorgungsleitung, erfasst und in Form eines Sensorsignals an eine mit dem Messsystem verbindbare Steuerungseinheit überträgt. Die Sensorleitung stellt somit eine Rückkopplung dar, über die das wahre, am Messpunkt vorhandene Signal an die Steuerungseinheit übertragbar ist. Das so übertragene Sensorsignal kann dann in der Steuerungseinheit ausgewertet und zur Nachregelung des Messsystems, beispielsweise einer zur Versorgung am Messsystem bereitgestellten Versorgungsspannung, verwendet werden. Als Fühlleitung in diesem Sinne wird somit eine Sensorleitung verstanden, die an einer Komponente des Messsystems angeordnet ist und so mit der Komponente zusammenwirkt, dass sie einen Zustand des Messsystems oder der Komponente des Messsystems abtastet und in Form eines Sensorsignals an die Steuerungseinrichtung zurückführt und somit eine Regelung des Messsystems ermöglicht. Die zu diesem Zweck vorgesehenen Sensorleitungen sind hierbei als separate Leitungen neben anderen, zur Verbindung des Messsystems mit der Steuerungseinrichtung verwendeten Leitungen, beispielsweise Messsignalleitungen zur Übertragung von eine Messgröße des Messsystems darstellenden Messsignalen oder Versorgungsleitungen zur Bereitstellung einer Versorgungsspannung, ausgebildet und stellen somit eine zusätzliche Verbindung zwischen dem Messsystem und der Steuerungseinheit dar.

Eine Ausführungsform eines solchen gattungsgemäßen Messsystems kann insbesondere eine Messeinheit zur Erfassung eines Messsignals und eine Konfigurationseinheit zur Konfiguration und Kalibrierung des Messsystems aufweisen. Zur Steuerung und Versorgung des Messsystems, insbesondere der Messeinheit und der Konfigurationseinheit, ist das Messsystem dann mit der Steuerungseinheit verbindbar, die eine Auswerteeinheit zur Auswertung der vom Messsystem empfangenen Messsignale, eine Versorgungseinheit zur Bereitstellung einer Versorgungsspannung und eine Kalibriereinheit zur Kalibrierung des Messsystems aufweisen kann. Die Auswerteeinheit, die Versorgungseinheit und die Kalibriereinheit der Steuerungseinheit sind dabei jeweils über Messsignalleitungen, Versorgungsleitungen und Kalibrierleitungen mit dem Messsystem verbunden.

Vor Inbetriebnahme des Messsystems wird das Messsystem über die Kalibrierleitungen mit der Kalibriereinheit der Steuerungseinheit verbunden und mittels von der Kalibriereinheit der Steuerungseinheit übertragener Kalibrierund Konfigurationsdaten kalibriert und konfiguriert. Im Betrieb erfasst das Messsystem über die Messeinheit eine Messgröße in Form von Messdaten und überträgt diese in Form von Messsignalen über die Messsignalleitungen an die Auswerteeinheit der Steuerungseinheit, in der die Messsignale verarbeitet und ausgewertet werden. Ist im Betrieb eine Nachkalibrierung erforderlich, so wird der Messbetrieb unterbrochen, das Messsystem wiederum über die Kalibrierleitungen mit der Kalibriereinheit der Steuerungseinheit verbunden und nachkalibriert.

Ein derartiges Messsystem in Form eines Winkelsensors ist aus der DE 196 52 988 C2 bekannt, das zur Erfassung der Relativpositionen zweier Kraftfahrzeugteile, z. B. eines Fahrwerks und eines Chassis, positionsabhängige elektrische Steuersignale mittels eines Magneten und einem mit dem Magneten zusammenwirkenden Hallsensor erzeugt, wobei der Magnet und der Hallsensor relativ zueinander verdrehbar angeordnet sind und der Hallsensor ein vom relativen Verdrehwinkel der beiden Teile abhängiges elektrisches Spannungssignal liefert. Gemäß der DE 196 52 988 C2 umfasst das als Winkelsensor ausgebildete Messsystem eine eine Konfigurationseinheit ausbildende elektronische Korrektureinheit, die über eine Schnittstelle, insbesondere einen seriellen Bus in Form eines I²C-Busses mit einer Steuerungseinheit verbindbar ist. Über den seriellen Bus liefert die Steuerungseinheit in einer Kalibrierphase verdrehwinkelabhängige Korrekturwerte an die Korrektureinheit, die in einem Speicher abgespeichert und zur Konfiguration und Kalibrierung des Messsystems verwendet werden. Der serielle Bus stellt hierbei eine Schnittstelle des Messsystems dar, über die die Steuerungseinheit zur Kalibrierung und Konfiguration des Messsystems an das Messsystem anschließbar ist und die parallel zu den zur Übertragung von Messsignalen und der Versorgungsspannung dienenden Messsignalleitungen und Versorgungsleitungen vorgesehen sein muss.

Nachteilig bei derartigen Messsystemen ist somit, dass zur Verbindung des Messsystems mit einer die Signale des Messsystems verarbeitenden und das Messsystem regelnden Steuerungseinheit eine Vielzahl von parallelen Verbindungsleitungen vorgesehen sein müssen, die die Verbindung des Messsystems mit der Steuerungseinheit erschweren und aufwendig gestalten.

Ein Messsystem, bei dem Leitungen zur Verbindung des Messsystems mit einer Steuerungseinheit eingespart werden, indem Messsignale über Versorgungsleitungen übertragen werden, ist aus der EP 0 866 391 A1 bekannt, die ein als Positionsmesseinrichtung ausgebildetes Messsystem zur Verfügung stellt, das zur Bestimmung der Position zweier relativ zueinander beweglicher Teile, beispielsweise an einer Werkzeugmaschine, eingesetzt wird. Bei dem Messsystem gemäß der EP 0 866 391 A1 übertragen die Versorgungsleitungen zum einen eine Versorgungsspannung in Form eines Gleichspannungssignals zur Energieversorgung des Messsystems und zum anderen zeitlich veränderliche, modulierte Messsignale, die auf die Versorgungsspannung aufmoduliert sind, an die Steuerungseinheit übertragen und in Modulator-/Demodulatoreinheiten der Steuerungseinheit ausgewertet werden.

Das Dokument US6343498 offenbart ein Messsystem gemäß den stand der Technik.

Der vorliegenden Erfindung liegt die Aufgabe zugrunde, ein Messsystem zur Verfügung zu stellen, mittels dessen die Anzahl der zur Verbindung eines Messsystems mit einer Steuerungseinheit erforderlichen Leitungen reduziert werden kann, ohne den Aufbau und den Betrieb des Messsystems wesentlich zu beeinflussen.

Diese Aufgabe wird durch einen Gegenstand mit den Merkmalen des Anspruchs 1 gelöst.

Erfindungsgemäß ist hierbei vorgesehen, dass bei einem Messsystem der gattungsgemäßen Art eine Schalteinheit vorgesehen ist, die die mindestens eine Sensorleitung des Messsystems so schaltet, dass sie abhängig vom Schaltzustand der Schalteinheit als Fühlleitung zur Übertragung des Sensorsignals oder als Datenleitung zur Übertragung eines vom Sensorsignal verschiedenen Datensignals eingesetzt ist.

Die Erfindung geht von dem Grundgedanken aus, dass Sensorleitungen, die bei einem Messsystem vorgesehen sind, um als Fühlleitung einen Zustand des Messsystems abzutasten und in Form von Sensorsignalen an eine mit der Sensorleitung verbundenen Steuerungseinheit zu übertragen, mittels einer Schalteinheit so schaltbar ausgelegt werden, dass sie zum einen als Fühlleitung zur Übertragung des Sensorsignals eingesetzt werden können, zum anderen aber auch so umgeschaltet und mit Komponenten des Messsystems verbunden werden können, dass sie als Datenleitung zur Übertragung von von den Sensorsignalen verschiedenen Datensignalen dienen. Die Erfindung ermöglicht somit eine Mehrfachverwendung einer oder mehrerer Sensorleitungen des Messsystems, zum einen in herkömmlicher Weise als Fühlleitungen und zum anderen als Datenleitungen zur Übertragung weiterer Datensignale. Die Erfindung nutzt hierbei die Erkenntnis aus, dass als Fühlleitungen verwendete Sensorleitungen nicht notwendigerweise ständig bereitgestellt werden müssen, sondern so geschaltet werden können, dass sie zu bestimmten Zeiten, beispielsweise in bestimmten Abständen oder in bestimmten Zuständen des Messsystems (zum Beispiel im Normalbetrieb), als Fühlleitungen und in anderen Zeiten (zum Beispiel in einer Kalibrierungsphase) als Datenleitungen eingesetzt werden.

Wesentlicher Vorteil der Erfindung ist, dass Leitungen eingespart werden können, indem eine oder mehrere Sensorleitungen des Messsystems mehrfach verwendet werden. Dieses wird erreicht, indem eine Schalteinheit in jeder Sensorleitung im Messsystem angeordnet wird, mittels derer die Sensorleitung dann schaltbar und mit Komponenten des Messsystems verbindbar ist. Die erforderliche bauliche Veränderung des Messsystems, bestehend in der Anordnung der Schalteinheit an der Sensorleitung, ist somit gering und beeinträchtigt den normalen Betrieb und die Funktionalität des Messsystems nicht.

Vorzugsweise verbindet die Schalteinheit die Sensorleitung des Messsystems hierbei so mit einer Versorgungsleitung, dass die Sensorleitung die über die Versorgungsleitung übertragene Versorgungsspannung abtastet und als Fühlleitung an eine mit dem Messsystem verbundene Steuerungseinheit überträgt. Im Betrieb des Messsystems ist die Sensorleitung dann mit der Versorgungsleitung verbindbar und tastet die Versorgungsspannung ab. Durch die Erfassung der Versorgungsspannung mittels der als Fühlleitung dienenden Sensorleitung ist dann eine Nachregelung der Versorgungsspannung möglich.

In diesem Fall stellt das von der Sensorleitung übertragene Sensorsignal ein Versorgungsspannungssignal dar, das an die Steuerungseinheit übertragen wird und von der Steuerungseinheit entsprechend ausgewertet werden kann.

Insbesondere weist die mit dem Messsystem verbindbare Steuerungseinheit hierbei eine Versorgungseinheit auf, die das von der Sensorleitung übertragene Versorgungsspannungssignal auswertet und zur Nachregelung der Versorgungsspannung verwertet. Auf diese Weise können Schwankungen in der Versorgungsspannung und äußere Einflüsse, beispielsweise Temperatureinflüsse, nachgeregelt werden.

Erfindungsgemäß können eine oder mehrere Sensorleitungen des Messsystems mittels jeweils einer Schalteinheit so umgeschaltet werden, dass sie zum einen als Sensorleitung, beispielsweise zur Übertragung eines Versorgungsspannungssignals, und zum anderen als Datenleitung zur Übertragung eines Datensignals dienen. Vorteilhafterweise schaltet die Schalteinheit die Sensorleitung hierbei so, dass sie die Sensorleitung zur Übertragung des Datensignals mit einer Messeinheit des Messsystems und/oder einer Konfigurationseinheit des Messsystems verbindet. Durch die Schalteinheit wird die Sensorleitung somit derart mit der Messeinheit oder der Konfigurationseinheit verschaltet, dass sie zur Übertragung von Datensignalen, insbesondere der Übertragung von Messsignalen von der Messeinheit an die Steuerungseinheit oder von Bussignalen zwischen der Steuerungseinheit und der Konfigurationseinheit dienen kann. Die Sensorleitung wird in diesem Fall somit mehrfach verwendet und überträgt, abhängig vom Schaltzustand der Schalteinheit, als Fühlleitung entweder ein Sensorsignal oder als Datenleitung ein Datensignal der Messeinheit oder der Konfigurationseinheit.

Bevorzugt ist das Messsystem hierbei so ausgebildet, dass die Sensorleitung in Abhängigkeit vom Schaltzustand der Schalteinheit entweder mit einer Versorgungsleitung verbunden ist und ein Sensorsignal in Form eines Versorgungsspannungssignals zur Abtastung der Versorgungsleitung überträgt, mittels dessen die Versorgungsspannung dann nachgeregelt werden kann, oder mit der Messeinheit und/oder der Konfigurationseinheit verbunden ist und ein Datensignal überträgt, das durch die von der Messeinheit empfangenen Messsignale oder durch Bussignale, die zwischen der Konfigurationseinheit und der Steuereinheit ausgetauscht werden, ausgebildet ist. Die Sensorleitung ist dabei im Betrieb des Messsystems umschaltbar und kann somit in bestimmten Zeiten, beispielsweise in bestimmten zeitlichen Abständen, als Fühlleitung und in anderen Zeiten als Datenleitung zur Übertragung von Datensignalen eingesetzt werden.

Für den Fall, dass die Schalteinheit die Sensorleitung mit der Konfigurationseinheit verbindet, stellt die Sensorleitung bevorzugt einen seriellen Bus dar und bildet somit eine serielle Schnittstelle zwischen der Konfigurationseinheit des Messsystems und der mit dem Messsystem verbindbaren Steuerungseinheit, insbesondere einer Kalibriereinheit der Steuerungseinheit, aus. Ist die Sensorleitung somit mit der Konfigurationseinheit des Messsystems verbunden, so dient sie als serieller Bus, über den Konfigurations- und Kalibrierdaten in Form von Bussignalen zwischen der Steuerungseinheit und dem Messsystem ausgetauscht werden können. Die als serieller Bus ausgebildete Sensorleitung stellt auf diese Weise eine universelle Schnittstelle zwischen dem Messsystem und der Steuerungseinheit dar, über die im Rahmen der Konfiguration und Kalibrierung ein Abgleich des Messsystems erfolgen kann und die gleichzeitig einen Anschluss für Tests, Zustandsmessungen und Zustandsabfragen und dergleichen zur Verfügung stellt. Bei den übertragenen Bussignalen kann es sich dabei zum einen um Kalibrierdaten zur Kalibrierung des Messsystems handeln, die von der Kalibriereinheit der Steuerungseinheit an die Konfigurationseinheit des Messsystems übertragen werden und in der Konfigurationseinheit abgespeichert werden, zum zweiten aber auch um gerätespezifische Informationen, beispielsweise vom Hersteller spezifizierte, das Messsystem identifizierende Informationen, die von der Konfigurationseinheit an die Kalibriereinheit gesandt und von der Steuerungseinheit ausgewertet werden.

In einer vorteilhaften Ausgestaltung ist der serielle Bus hierbei als I²C-Bus ausgebildet und stellt somit eine standardisierte Schnittstelle zwischen dem Messsystem und der Steuerungseinheit zur Verfügung. Denkbar ist jedoch auch, den seriellen Bus als so genannten 1-Wire-Bus auszugestalten, der lediglich eine Leitung zur Übertragung von Datensignalen benötigt. In letzterem Fall ist es somit prinzipiell ausreichend, ausschließlich eine Sensorleitung umzuschalten und zur Übertragung von Datensignalen als seriellen Bus zu verwenden.

In einer besonders bevorzugten Ausgestaltung des Messsystems wird die Sensorleitung mittels der Schalteinheit dann zur Kalibrierung des Messsystems, insbesondere in einer initialen Kalibrierungsphase, mit der Konfigurationseinheit des Messsystems verbunden, nach der Kalibrierung umgeschaltet und mit der Versorgungsleitung verbunden, so dass die Sensorleitung im normalen Betrieb des Messsystems ein Versorgungsspannungssignal an die Steuerungseinheit überträgt, mittels dessen die Versorgungsspannung nachgeregelt werden kann. Ist nachfolgend eine Nachkalibrierung des Messsystems erforderlich, so kann die Sensorleitung wiederum umgeschaltet und mit der Konfigurationseinheit zur Übertragung von Kalibrier- und Korrekturdaten an das Messsystem verbunden werden.

Erfindungsgemäß schaltet die Schalteinheit die Sensorleitung. Bevorzugt wird die Schalteinheit hierbei mittels eines Schaltsignals geschaltet, das an die Schalteinheit übertragen wird und die Schalteinheit umschaltet.

Insbesondere kann das Schaltsignal hierbei über eine separate, mit der Schalteinheit verbundene Leitung an die Schalteinheit übertragen werden, wobei die zusätzliche Leitung als Steuerleitung der Schalteinheit ebenfalls mit der Steuerungseinheit verbunden werden kann. Das Schaltsignal wird dann durch die Steuerungseinheit zur Verfügung gestellt und schaltet die Schalteinheit so, dass sie entweder als Fühlleitung beispielsweise mit einer Versorgungsleitung oder als Datenleitung mit der Messeinheit oder der Konfigurationseinheit des Messsystems verbunden ist.

Denkbar und vorteilhaft ist zudem, dass das Schaltsignal durch ein Programmierspannungssignal ausgebildet ist, das standardmäßig an der Steuerungseinheit zur Verfügung steht und zur Programmierung von in der Konfigurationseinheit des Messsystems enthaltenen Speicherbauelementen, insbesondere EPROM- oder EEPROM-Speichern dient. Das Schaltsignal in Form des Programmierspannungssignals kann dann über eine mit der Konfigurationseinheit und der Schalteinheit verbundene Programmierspannungsleitung von der Steuerungseinheit an das Messsystem übertragen werden, so dass keine zusätzliche Leitung zur Verfügung gestellt werden muss, sondern die bestehende Programmierspannungsleitung sowohl für die Programmierung der in der Konfigurationseinheit enthaltenen Speicherbauelemente als auch zum Umschalten der Schalteinheit verwendet wird.

In einer vorteilhaften Ausgestaltung wird die Schalteinheit durch das Programmierspannungssignal dann so geschaltet, dass die Sensorleitung bei Anliegen des Programmierspannungssignals mit der Konfigurationseinheit und bei Nichtanliegen des Programmierspannungssignals mit der Versorgungsleitung verbunden ist. Mit anderen Worten: Wenn an der Programmierspannungsleitung kein Programmierspannungssignal anliegt, so ist die Sensorleitung standardmäßig mit der Versorgungsleitung verbunden und dient als Fühlleitung. Liegt hingegen ein Programmierspannungssignal an, so schaltet die Schalteinheit die Sensorleitung um und verbindet sie mit der Konfigurationseinheit, so dass Bussignale zwischen der Konfigurationseinheit und der Kalibriereinheit übertragen werden können.

In einer alternativen Ausgestaltung kann das Schaltsignal jedoch auch über die Sensorleitung selbst oder eine Versorgungsleitung oder eine andere zur Verbindung der Steuerungseinrichtung und des Messsystems dienenden Leitung übertragbar sein. Auf diese Weise ist keine zusätzliche Leitung zur Übertragung des Sensorsignals und insbesondere auch keine Programmierspannungsleitung erforderlich. Wird das Schaltsignal dabei beispielsweise über eine Versorgungsleitung übertragen, so wird die Versorgungsleitung zum einen zur Übertragung der Versorgungsspannung zur Versorgung des Messsystems und zum anderen zur Übertragung des Schaltsignals zum Umschalten der Schalteinheit verwendet, so dass zusätzliche Leitungen zur Übertragung des Schaltsignals eingespart werden können.

Um das Schaltsignal bei Übertragung des Schaltsignals über eine bestehende Leitung von dem eigentlich zu übertragenen Signal zu trennen, kann das Schaltsignal auf das zu übertragene Signal aufmoduliert werden. Insbesondere kann somit das Schaltsignal auch auf die über eine Versorgungsleitung übertragene Versorgungsspannung aufmoduliert sein, wobei die Versorgungsspannung beispielsweise ein Gleichspannungssignal und das Schaltsignal ein moduliertes, zeitlich veränderliches und durch einen bestimmten Frequenzbereich beschreibbares Signal sein kann. Prinzipiell können auf diese Weise alle zur Verbindung der Steuerungseinheit mit dem Messsystem dienenden Leitungen zur Übertragung des Schaltsignals mehrfach verwendet werden, wobei sichergestellt sein muss, dass die Frequenzbereiche der eigentlich zu übertragenden Signale sich nicht mit dem Frequenzbereich des zu übertragenden Schaltsignals überlappen. Die Übertragung eines Schaltsignals über eine Versorgungsleitung ist beispielsweise auch aus der EP 0 866 305 B1 bekannt, bei der ein Schaltsignal über eine zur Versorgung einer Positionsmesseinrichtung dienende Versorgungsleitung übertragen und auf die zu übertragende Versorgungsspannung aufmoduliert ist.

Vorteilhafterweise kann die Schalteinheit hierbei mit einem Schaltsignalwandler verbunden sein, der wiederum mit der Sensorleitung oder der Versorgungsleitung, über die das Schaltsignal übertragen wird, verbunden ist, das über die Sensorleitung oder die Versorgungsleitung übertragene Schaltsignal abgreift und zum Schalten der Schalteinheit auswertet. Der Schaltsignalwandler kann hierbei insbesondere eine Modulator-/Demodulatoreinheit sein, die das auf die Versorgungsspannung aufmodulierte Schaltsignal demoduliert und der Schalteinheit zur Verfügung stellt und die Schalteinheit somit schaltet.

Für die Schalteinheit sind hierbei unterschiedlichste Ausführungsformen denkbar. Beispielsweise kann die Schalteinheit als Analogschalter, als mechanischer Schalter oder als elektronischer Schalter, insbesondere MOSFET-Schalter ausgebildet sein.

Der der Erfindung zugrunde liegende Gedanke soll nachfolgend anhand der in den Figuren dargestellten Ausführungsbeispiele näher erläutert werden. Es zeigen:
- Fig. 1: eine schematische Darstellung eines mit einer Steuerungseinheit verbundenen Messsystems gemäß dem Stand der Technik;
- Fig. 2: eine schematische Darstellung eines Messsystem gemäß einer ersten Ausführungsform der Erfindung mit zwei mehrfach verwendeten Sensorleitungen und
- Fig. 3: eine schematische Darstellung eines Messsystem gemäß einer zweiten Ausführungsform der Erfindung mit zwei mehrfach verwendeten Sensorleitungen.

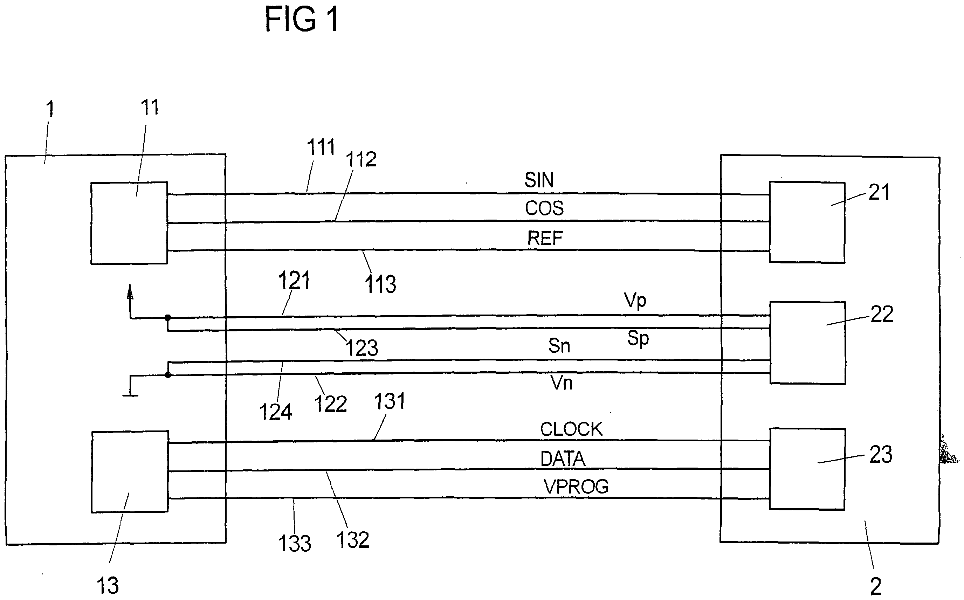

Fig. 1 zeigt ein aus dem Stand der Technik bekanntes Messsystem 1, das über Messsignalleitungen 111, 112, 113, Versorgungsleitungen 121, 122, einen seriellen Bus 131, 132 und eine Programmierspannungsleitung 133 mit einer Steuerungseinrichtung 2 verbunden ist. Das Messsystem 1 weist hierbei eine Messeinheit 11 zur Erfassung einer Messgröße auf, die in Messsignale SIN, COS, REF umgesetzt und in Form der Messsignale SIN, COS, REF über die Messsignalleitungen 111, 112, 113 an eine Auswerteeinheit 21 der Steuerungseinheit 2 übertragen wird. Weiterhin ist im Messsystem 1 eine Konfigurationseinheit 13 angeordnet, die zur Konfiguration und Kalibrierung des Messsystems 1 dient und über den seriellen Bus 131, 132 und die Programmierspannungsleitung 133 mit einer Kalibriereinheit 23 der Steuerungseinheit 2 verbunden ist.

Das Messsystem 1 kann beispielsweise als Positionsmesseinrichtung zur Erfassung einer Messgröße in Form der Position eines Objektes ausgebildet sein, bei dem die Messeinheit 11 positionsabhängige Messsignale liefert und über die Messsignalleitungen 111, 112, 113 an die Auswerteeinheit 21 der Steuerungseinheit 2 überträgt. In diesem Fall kann die Messeinheit 11 in einer möglichen Ausgestaltung zur inkrementellen Positionsmessung ausgelegt sein, bei der eine periodische Maßstabteilung abgetastet wird und ein analoges Messsignal SIN, COS, REF in Form eines Abtastsignals erzeugt und an die Steuerungseinheit 2 übertragen wird. Denkbar ist beispielsweise, dass die Messeinheit 11 einen oder mehrere Hallsensoren aufweist, die die relative Bewegung eines mit Magneten versehenen Maßstabs erfassen und entsprechende, die Position des Maßstabs angebende Messsignale SIN, COS, REF erzeugen. Die Messsignale SIN, COS, REF können dann entweder als analoge oder als digitale Messsignale an die Steuerungseinheit übertragen werden, wobei im letzteren Fall eine Digitalisierung der Messsignale SIN, COS, REF bereits im Messsystem erfolgt und digitale Messsignale SIN, COS, REF über die Messsignalleitungen 111, 112, 113 an die Steuerungseinheit 2 übertragen und in der Steuerungseinheit 2 verarbeitet werden.

Prinzipiell betrifft die hier vorgestellte Erfindung jedoch jede Art von Messsystemen zur Erfassung einer Messgröße und ist nicht nur für Positionsmesseinrichtungen einsetzbar.

Das Messsystem 1 gemäß Fig. 1 weist eine Konfigurationseinheit 13 auf, die über den seriellen Bus 131, 132 und eine Programmierspannungsleitung 133 mit der Kalibriereinheit 23 der Steuerungseinheit 2 verbunden ist. Mittels der Konfigurationseinheit 13 lässt sich das Messsystem 1 vor Inbetriebnahme konfigurieren und kalibrieren. Hierzu wird die Kalibriereinheit 23 über den seriellen Bus 131, 132 mit der Konfigurationseinheit 13 des Messsystems 1 verbunden, so dass Bussignale CLOCK, DATA zwischen der Konfigurationseinheit 13 des Messsystems 1 und der Kalibriereinheit 23 der Steuerungseinheit 2 übertragen werden können. Der serielle Bus 131, 132 kann hierbei insbesondere als ein zwei Leitungen 131, 132 umfassender I²C-Bus ausgebildet sein, der eine serielle digitale Schnittstelle zwischen der Kalibriereinheit 23 und der Konfigurationseinheit 13 darstellt und eine serielle Übertragung der Bussignale CLOCK, DATA sowohl von der Kalibriereinheit 23 an die Konfigurationseinheit 13 als auch von der Konfigurationseinheit 13 an die Kalibiereinheit 23 ermöglicht. Der I²C-Bus benutzt standardmäßig zwei bidirektionale Leitungen 131, 132, über die zum einen ein Taktsignal CLOCK und zum anderen ein Datensignal DATA übertragen wird. Der I²C-Bus stellt somit eine standardisierte Schnittstelle zwischen der Steuerungseinheit 2 und dem Messsystem 1 dar und ermöglicht die Übertragung von seriellen Bussignalen über zwei Leitungen in Form des seriellen Bus 131, 132. Denkbar ist in diesem Zusammenhang jedoch auch, den seriellen Bus als so genannten 1-Wire-Bus auszugestalten, der lediglich eine Leitung zur Übertragung der seriellen Bussignale benötigt, so dass eine der Leitungen 131, 132 eingespart werden kann.

Die Konfigurationseinheit 13 des Messsystems 1 weist herkömmlicherweise programmierbare Speicherbauelemente in Form beispielsweise eines EPROMs oder eines EEPROMs auf, die die von der Kalibriereinheit 23 empfangenen Bussignale CLOCK, DATA speichern und zur Kalibrierung und Konfiguration des Messsystems 1 bereitstellen. Die Konfigurationseinheit 13 ist zu diesem Zweck mit einer Programmierspannungsleitung 133 verbunden, über die ein Programmierspannungssignal VPROG von der Kalibriereinheit 23 der Steuerungseinheit 2 an die Konfigurationseinheit 13, insbesondere die in der Konfigurationseinheit 13 enthaltenen Speicherbauelemente gesendet wird und mittels derer die programmierbaren Speicherbauelemente programmiert werden können.

Weiterhin ist das Messsystem 1 mit einer Versorgungseinheit 22 der Steuerungseinheit 2 über Versorgungsleitungen 121, 122 verbunden, über die eine Versorgungsspannung Vp, Vn am Messsystem 1 bereitgestellt wird. Die Versorgungsleitungen 121, 122 sind dabei intern im Messsystem 1 mit den Komponenten des Messsystems 1, insbesondere der Messeinheit 11 und der Konfigurationseinheit 13 des Messsystems 1 verbunden und dienen zur elektrischen Versorgung des Messsystems 1 und seiner Komponenten 11, 13. Infolge von äußeren Einflüssen, beispielsweise Temperaturänderungen oder dergleichen, oder durch die Leitungslänge der Versorgungsleitungen 121, 122 kann es zu Beeinflussungen und Schwankungen in der Versorgungsspannung Vp, Vn am Messsystem 1 kommen, so dass die Versorgungsspannung Vp, Vn am Messsystem 1 vom gewünschten Wert abweichen kann. Daher ist es erforderlich, dass die Versorgungsspannung Vp, Vn, die am Messsystem 1 zur Verfügung steht, stetig überprüft und gegebenenfalls nachgeregelt wird. Zu diesem Zweck sind zwei Sensorleitungen 123, 124 am Messsystem 1 vorgesehen, die im Messsystem 1 mit den Versorgungsleitungen 121, 122 verbunden sind und die Versorgungsspannung Vp, Vn an den Versorgungsleitungen 121, 122 im Messsystem 1 abtasten. Über die Sensorleitungen 121, 122 wird dann ein Versorgungsspannungssignal Sp, Sn vom Messsystem 1 an die Versorgungseinheit 22 der Steuerungseinheit 1 übertragen, in der Versorgungseinheit 22 mittels der darin enthaltenen Elektronik ausgewertet und zur Nachregelung der Versorgungsspannung Vp, Vn verwendet. Die Sensorleitungen 123, 124 stellen somit eine Rückkopplung dar, über die die wahre, am Messsystem 1 zur Verfügung stehende Versorgungsspannung Vp, Vn erfassbar ist und eine automatische Nachregelung der Versorgungsspannung Vp, Vn ermöglicht wird. Prinzipiell können weitere Sensorleitungen auch mit weiteren Messpunkten des Messsystems 1 verbunden sein und Sensorsignale beispielsweise von Knotenpunkten einer verwendeten Leiterplatte, von intern im Messsystem 1 erzeugten Testsignalen und/oder von Referenzspannungsknoten an die Steuerungseinheit 2 übertragen.

Beim in Fig. 1 dargestellten Messsystem 1 muss für jedes einzelne zu übertragende Signal SIN, COS, REF, Vp, Vn, Sp, Sn, CLOCK, DATA, VPROG eine separate Leitung 111, 112, 113; 121, 122, 123, 124, 131, 132, 133 zur Verfügung gestellt werden. Insbesondere sind hierbei parallele Sensorleitungen 123, 124 und Messsignalleitungen 111, 112, 113 sowie die Leitungen des seriellen Busses 131, 132 vorgesehen und verbinden parallel die Steuerungseinheit 2 mit dem Messsystem 1.

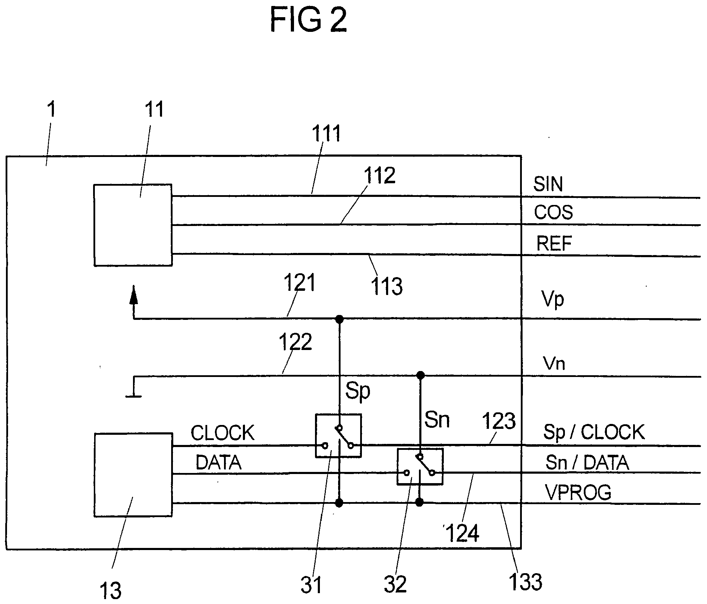

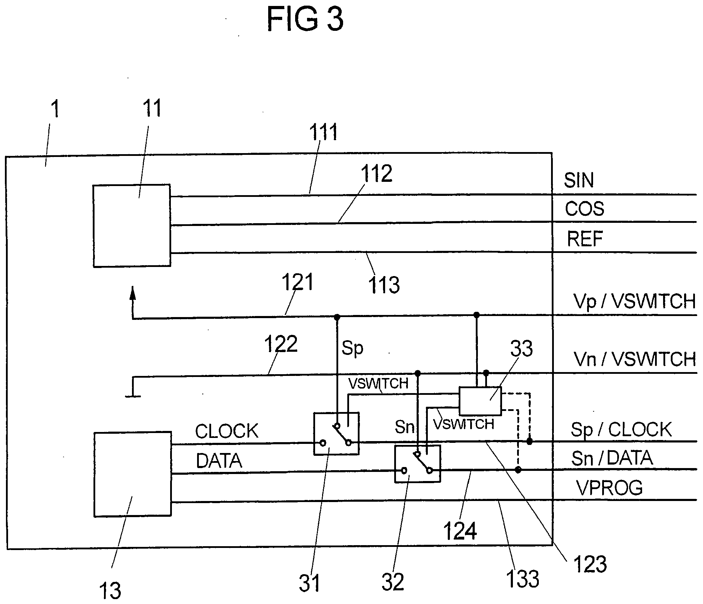

In Fig. 2 und Fig. 3 sind zwei Ausführungsformen eines erfindungsgemäßen Messsystems 1 dargestellt, bei denen die Sensorleitungen 123, 124 mehrfach verwendet werden, indem sie über im Messsystem 1 angeordnete Schalteinheiten 31, 32 entweder mit den Versorgungsleitungen 121, 122 oder, in Abhängigkeit vom Schaltzustand der Schalteinheiten 31, 32, mit der Konfigurationseinheit 13 des Messsystems 1 verbindbar sind. Mittels der Schalteinheiten 31, 32 sind die Sensorleitungen 123, 124 somit schaltbar und abhängig vom Schaltzustand der Schalteinheiten 31, 32 als Fühlleitungen zur Übertragung von Sensorsignalen, nämlich von an den Versorgungsleitungen 121, 122 abgetasteten Versorgungsspannungssignalen, oder als Datenleitungen zur Übertragung von Datensignalen, nämlich den Bussignalen CLOCK, DATA, einsetzbar.

Bei den Ausführungsformen gemäß Fig. 2 und Fig. 3 sind die Sensorleitungen 123, 124 dabei jeweils entweder mit den Versorgungsleitungen 121, 122 oder der Konfigurationseinheit 13 verbindbar. Sind die Sensorleitungen 123, 124 mit der Konfigurationseinheit 13 verbunden, so fungieren sie als Leitungen eines seriellen Busses, stellen somit eine serielle Schnittstelle zwischen der Steuerungseinheit 2 und dem Messsystem 1 dar und übertragen Bussignale CLOCK, DATA zwischen der Kalibriereinheit 23 der Steuerungseinheit 2 und der Konfigurationseinheit 13 des Messsystems 1.

Prinzipiell ist auch denkbar, dass die Sensorleitungen 123, 124 über die Schalteinheiten 31, 32 auch mit den Messsignalleitungen 111, 112, 113 verbindbar sind, so dass die Sensorleitungen 123, 124 zum einen als Fühlleitungen Versorgungsspannungssignale Sp, Sn oder zum anderen als Datenleitungen Bussignale CLOCK, DATA oder Messsignale SIN, COS an die oder von der Steuerungseinheit 2 übertragen. Ergänzend zu den in Fig. 2 und Fig. 3 dargestellten Ausführungsformen ist somit auch denkbar, dass die Sensorleitungen 123, 124 so schaltbar ausgelegt sind, dass sie in Abhängigkeit vom Schaltzustand der Schalteinheiten 31, 32 entweder Sensorsignale in Form der Versorgungsspannungssignale Sp, Sn oder Datensignale in Form der Messsignale SIN, COS übertragen, die Sensorleitungen 123, 124 somit entweder mit den Versorgungsleitungen 121, 122 oder der Messeinheit 11 verbunden sind. Auch eine Schalteinheit, die die Sensorleitungen 123, 124 zwischen Versorgungsleitungen 121, 122, Messeinheit 11 und Konfigurationseinheit 13 beispielsweise in bestimmten zeitlichen Intervallen hin- und herschaltet, ist in diesem Zusammenhang möglich.

Ist der serielle Bus als so genannter 1-Wire-Bus ausgestaltet, der lediglich eine Leitung zur Übertragung der seriellen Bussignale benötigt, so ist in diesem Zusammenhang prinzipiell erforderlich, lediglich eine der Sensorleitungen 123, 124 als seriellen Bus zu verwenden und entsprechend umzuschalten. Die andere Sensorleitung 123, 124 kann dann beispielsweise als Messsignalleitung 111, 112, 113 zur Übertragung von Messsignalen SIN, COS eingesetzt werden.

Wesentlich für die Erfindung ist, dass die Sensorleitungen 123, 124 so schaltbar sind, dass sie entweder als Fühlleitungen ein Sensorsignal oder als Datenleitungen ein Datensignal in Form eines Messsignals oder eines Bussignals übertragen können. Die Sensorleitungen 123, 124 sind somit mehrfach verwendbar, so dass parallele Leitungen zur Verbindung des Messsystems 1 mit der Steuerungseinheit 2 zumindest teilweise eingespart werden können.

Denkbar ist hierbei, dass die Schalteinheiten 31, 32 so geschaltet werden, dass sie in einer Kalibrierungsphase vor Inbetriebnahme des Messsystems 1 zunächst die Sensorleitungen mit der Konfigurationseinheit 13 des Messsystems 1 verbinden, um Bussignale CLOCK, DATA von der Kalibriereinheit 23 der Steuerungseinheit 2 zur Konfiguration und Kalibrierung des Messsystems 1 an die Konfigurationseinheit 13 des Messsystems zu übertragen. Nach Vollendung der Kalibrierungsphase werden die Schalteinheiten 31, 32 dann umgeschaltet und die Sensorleitungen 123, 124 mit den Versorgungsleitungen 121, 122 verbunden. Während des Betriebes des Messsystems 1 tasten die Sensorleitungen 123, 124 dann die Versorgungsspannung Vp, Vn an den Versorgungsleitungen 121, 122 am Messsystem 1 ab und übertragen ein entsprechendes Versorgungsspannungssignal Sp, Sn an die Steuerungseinheit 2, insbesondere die Versorgungseinheit 22, mittels der die Versorgungsspannung Vp, Vn nachgeregelt und somit eine konstante Versorgungsspannung Vp, Vn unabhängig von äußeren Einflüssen am Messsystem 1 zur Verfügung gestellt werden kann. Ist eine Nachkalibrierung im Betrieb des Messsystems 1 erforderlich, so können die Sensorleitungen 123, 124 mittels der Schalteinheiten 31, 32 dann jederzeit umgeschaltet und mit der Konfigurationseinheit 13 verbunden werden, um Bussignale CLOCK, DATA in Form von Korrekturwerten an die Konfigurationseinheit 13 des Messsystems 1 zu übertragen. Ist die Nachkalibrierung abgeschlossen, werden die Sensorleitungen 123, 124 wieder umgeschaltet, übertragen Sensorsignale in Form von Versorgungsspannungssignalen Sp, Sn und ermöglichen die Nachregelung der Versorgungsspannung Vp, Vn.

Bei einer weiteren Ausgestaltung - wenn nämlich vorgesehen ist, dass die Sensorleitungen 123, 124 zum einen mit den Versorgungsleitungen 121, 122, um als Fühlleitungen zu dienen, und sowohl mit der Konfigurationseinheit 13 als auch der Messeinheit 11, um als Datenleitungen zu dienen, verbindbar sind - können die Sensorleitungen 123, 124 vor Inbetriebnahme zur Kalibrierung des Messsystems 1 mit der Konfigurationseinheit 13 verbunden werden, um dann im Betrieb zwischen den Versorgungsleitungen 121, 122 zur Nachregelung der Versorgungsspannung Vp, Vn und der Messeinheit 11 zur Übertragung von Messsignalen SIN, COS hin und her geschaltet zu werden.

Die Schalteinheiten 31, 32 werden mittels Schaltsignalen VPROG, VSWITCH, geschaltet und somit als Fühlleitungen zur Übertragung von Sensorsignalen Sp, Sn oder als Datenleitungen zur Übertragung von Datensignalen CLOCK, DATA eingesetzt. Die Schaltsignale VPROG, VSWITCH werden hierbei von der Steuerungseinheit 2 erzeugt und an die Schalteinheiten 31, 32 des Messsystems 1 übertragen. Fig. 2 und Fig. 3 zeigen hierbei zwei prinzipielle Möglichkeiten der Übertragung der Schaltsignale VPROG, VSWITCH an die Schalteinheiten 31, 32 des Messsystems.

Bei der Ausführungsform gemäß Fig. 2 ist das Schaltsignal durch ein Programmierspannungssignal VPROG ausgebildet, das über eine Programmierspannungsleitung 133 von der Steuerungseinheit 2 an das Messsystem 1 übertragen wird. Vorteilhaft ist hierbei, dass das Programmierspannungssignal VPROG in der Regel über die Programmierspannungsleitung 133 am Messsystem 1 zur Verfügung steht. Mittels des Programmierspannungssignals VPROG erfolgt herkömmlicherweise die Programmierung der programmierbaren Speicherbauelemente der Konfigurationseinheit 13, die insbesondere als EPROM- oder EEPROM-Speicherbauelemente ausgebildet sein können. Das Schaltsignal wird somit über eine bereits vorhandene Leitung, nämlich die Programmierspannungsleitung 133 übertragen. Insbesondere ist es hierbei denkbar, dass das Schaltsignal durch das Programmierspannungssignal VPROG selbst ausgebildet ist und das Programmierspannungssignal VPROG die Schalteinheiten 31, 32 schaltet. In einer vorteilhaften Ausgestaltung ist es beispielsweise möglich, dass bei Anliegen des Programmierspannungssignal VPROG die Sensorleitungen 123, 124 mit der Konfigurationseinheit 13 verbunden und zur Übertragung von Bussignalen CLOCK, DATA dienen. Liegt das Programmierspannungssignal VPROG hingegen nicht an, so sind die Sensorleitungen 123, 124 standardmäßig mit den Versorgungsleitungen 121, 122 verbunden und übertragen ein Sensorsignal in Form des Versorgungsspannungssignals Sp, Sn. Dieses ist zweckmäßig, da die Programmierung der Speicherbausteine der Konfigurationseinheit 13 in der Regel ausschließlich in einer Kalibrierungsphase erfolgt, in der Bussignale CLOCK, DATA über die Sensorleitungen 123, 124 an die Konfigurationseinheit 13 übertragen werden. Liegt kein Programmierspannungssignal VPROG an, so ist dann keine Übertragung von Bussignalen CLOCK, DATA möglich und eine Kalibrierung des Messsystems 1 ausgeschlossen.

Eine andere Ausführungsform zur Übertragung eines Schaltsignals ist in Fig. 3 dargestellt. Hierbei erfolgt die Übertragung eines Schaltsignals VSWITCH über die Versorgungsleitungen 121, 122. Das Schaltsignal VSWITCH ist zu diesem Zweck auf die Versorgungsspannung Vp, Vn aufmoduliert und wird zusammen mit der Versorgungsspannung Vp, Vn über die Versorgungsleitungen 121, 122 übertragen. Zur Erfassung des Schaltsignals VSWITCH ist ein Schaltsignalwandler 33 mit den Versorgungsleitungen 121, 122 verbunden, demoduliert das Schaltsignal VSWITCH vom über die Versorgungsleitungen 121, 122 übertragenen Gesamtsignal Vp, Vn, VSWITCH und leitet das so detektierte Schaltsignal VSWITCH zum Schalten der Schalteinheiten 31, 32 an die Schalteinheiten 31, 32 weiter. Prinzipiell ist es hierbei möglich, dass ein oder mehrere Schaltsignale VSWITCH über lediglich eine Versorgungsleitung 121, 122 oder über beide Versorgungsleitungen 121, 122 übertragen werden. Ebenso ist es denkbar, dass ein oder mehrere Schaltsignale über die Sensorleitungen 123, 124 übertragen werden, wobei die Sensorleitungen 123, 124 zu diesem Zweck über die in Fig. 3 gestrichelt dargestellten Verbindungsleitungen mit dem Schaltsignalwandler 33 verbunden sind, der die Schaltsignale VSWITCH auswertet und an die Schalteinheiten 31, 32 weiterleitet.

Grundlegend für die Übertragungsvariante der Schaltsignale VSWITCH gemäß Fig. 3 ist, dass ein oder mehrere Schaltsignale VSWITCH auf über eine bestehende Leitung 121, 122 übertragene Signale, beispielsweise die Versorgungsspannung Vp, Vn, aufmoduliert werden und somit über die bestehende Leitung mehrere Signale übertragen werden. Die Übertragung mehrerer Signale kann dabei mittels bekannter Multiplex-Verfahren erfolgen, wobei wesentlich ist, dass die übertragenen Signale in der Zeit und/oder der Frequenz oder mittels anderer Codierungsverfahren voneinander getrennt und unterscheidbar sind, um eine Demodulation der Signale zu ermöglichen. Dass zusätzliche Signale über eine Versorgungsleitung übertragen werden können, ist beispielsweise auch aus der EP 0 866 305 B1 bekannt, bei der ein Schaltsignal über eine Versorgungsleitung übertragen, dabei auf die Versorgungsspannung aufmoduliert und zum Schalten einer Schalteinheit demoduliert wird. Die Schaltsignale können hierbei eine unterschiedliche Dauer und/oder unterschiedliche Frequenz aufweisen, somit unterschiedliche Schaltsignale charakterisieren und auf diese Weise von der in der Regel als Gleichspannungssignal ausgebildeten Versorgungsspannung Vp, Vn unterscheidbar sein.

Die Schalteinheit 31, 32 bei den vorangehend beschriebenen Ausführungsformen gemäß Fig. 2 und Fig. 3 kann als Analogschalter, als mechanischer Schalter oder als elektronischer Schalter, insbesondere MOSFET-Schalter ausgebildet sein. Insbesondere ist es auch möglich, anstelle eines Umschalters, der, wie schematisch in Fig. 2 und 3. dargestellt, die Sensorleitung 123, 124 zwischen der Versorgungsleitung 121, 122 und der Konfigurationseinheit 13 umschaltet, einen einfachen Schalter vorzusehen, der in dem Verbindungsabschnitt der Sensorleitung 123, 124 mit der Versorgungsleitung 121, 122 angeordnet ist und lediglich die Verbindung der Sensorleitung 123, 124 mit der Versorgungsleitung 121, 122 beeinflusst. Dieser Schalter trennt somit in geöffnetem Zustand die Sensorleitung 123, 124 von der Versorgungsleitung 121, 122, während er in geschlossenem Zustand die Verbindung zur Versorgungsleitung 121, 122 herstellt. Die Verbindung der Sensorleitung 123, 124 mit der Konfigurationseinheit 13 wird von dem Schalter in diesem Fall nicht beeinflusst, sondern besteht dauerhaft, wobei eine Übertragung von Datensignalen CLOCK, DATA aber nur möglich ist, wenn die Schalteinheit geöffnet ist und somit die Verbindung von der Sensorleitung 123, 124 zur Versorgungsleitung 121, 122 getrennt ist.

Wesentlich für die Erfindung ist somit, dass Sensorleitungen 123, 124 mehrfach verwendet werden und insbesondere in einer Kalibrierungsphase als serielle Datenleitungen zur Übertragung von Bussignalen CLOCK, DATA und im Betrieb als Fühlleitungen zur Übertragung von Sensorsignalen Sp, Sn verwendet werden können. Während der Kalibrierungsphase wird der Steuerungseinrichtung 2 somit kein Versorgungsspannungssignal Sp, Sn zur Verfügung gestellt, so dass eine Nachregelung der Versorgungsspannung Vp, Vn während der Kalibrierungsphase nicht möglich ist. Dass während der Kalibrierungsphase kein Versorgungsspannungssignal Sp, Sn zur Verfügung steht, muss dabei von der Versorgungseinheit 12 entsprechend berücksichtigt werden. Zweckmäßig ist hierbei, dass während der Kalibrierungsphase Versorgungsleitungen 121, 122 mit einer kurzen Kabellänge verwendet werden, um den Spannungsabfall an den Versorgungsleitungen 121, 122 und dessen Einfluss auf die am Messsystem 1 bereitgestellte Versorgungsspannung Vp, Vn zu minimieren. Weiterhin ist es vorteilhaft für die Sensorleitungen 123, 124 eine Leitungslänge kürzer als 3 m vorzusehen, um eine zuverlässige Übertragung der Bussignale CLOCK, DATA über die einen seriellen Bus ausbildenden Sensorleitungen 123, 124 zu gewährleisten.

Die Erfindung beschränkt sich in ihrer Ausführung nicht auf die vorstehend angegebenen bevorzugten Ausführungsbeispiele. Vielmehr ist eine Anzahl von Varianten denkbar, die von der erfindungsgemäßen Vorrichtung auch bei grundsätzlich anders gearteten Ausführungen Gebrauch machen.

## Patentansprüche

1. Messsystem zur Erfassung mindestens einer Messgröße, mit mindestens einer Sensorleitung, die als Fühlleitung vorgesehen ist zur Erfassung eines Zustands des Messsystems an einem Mosspunkt und zur Übertragung eines den Zustand anzeigenden Sensorsignals an eine mit dem Messsystem verbindbare Steuerungseinheit, wobei die Sensorleitung eine Rückkopplung darstellt, über die das wahre, am Messpunkt vorhandene Signal an die Steuerungseinheit übertragbar ist,
**gekennzeichnet durch**
eine Schalteinheit (31, 32), die die mindestens eine Sensorleitung (123, 124) des Messsystems (1) so schaltet, dass sie abhängig vom Schaltzustand der Schalteinheit (31, 32) als Fühlleitung zur Übertragung des Sensorsignals (Sp, Sn) oder als Datenleitung zur Übertragung eines vom Sensorsignal (Sp, Sn) verschiedenen Datensignals (CLOCK, DATA, SIN, COS, REF) eingesetzt ist.

2. Messsystem nach Anspruch 1, **dadurch gekennzeichnet, dass** die Schalteinheit (31, 32) ausgebildet und vorgesehen ist, die mindestens eine Sensorleitung (123, 124) mit einer Versorgungsleitung (121, 122) des Messsystems (1) zu verbinden.

3. Messsystem nach Anspruch 2, **dadurch gekennzeichnet, dass** das von der mindestens einen Sensorleitung (123, 124) übertragene Sensorsignal ein Versorgungsspannungssignal (Sp, Sn) ist.

4. Messsystem nach mindestens einem der vorangehenden Ansprüche, **dadurch gekennzeichnet, dass** die Schalteinheit (31, 32) die mindestens eine Sensorleitung (123, 124) zur Übertragung eines Datensignals mit einer Messeinheit (11) des Messsystems (1) und / oder mit einer Konfigurationseinheit (13) des Messsystems (1) verbindet.

5. Messsystem nach Anspruch 4, **dadurch gekennzeichnet, dass** das von der mindestens einen Sensorleitung (123, 124) übertragene Datensignal ein Messsignal (SIN, COS, REF) der Messeinheit (11) des Messsystems (1) und / oder ein Bussignal (CLOCK, DATA) zur Kalibrierung der Konfigurationseinheit (13) des Messsystems (1) ist.

6. Messsystem nach einem der Ansprüche 4 oder 5, **dadurch gekennzeichnet, dass** die mindestens eine Sensorleitung (123, 124) in Abhängigkeit vom Schaltzustand der Schalteinheit (31, 32) entweder
- mit der Versorgungsleitung (121, 122) zur Übertragung eines Sensorsignal (Sp, Sn) verbunden ist
oder
- mit der Messeinheit (11) und/oder der Konfigurationseinheit (13) zur Übertragung eines Datensignal (CLOCK, DATA, SIN, COS, REF)verbunden ist.

7. Messsystem nach einem der Ansprüche 4 bis 6, **dadurch gekennzeichnet, dass** die mindestens eine Sensorleitung (123, 124) zur Verbindung mit der Konfigurationseinheit (13) einen seriellen Bus (131, 132) darstellt.

8. Messsystem nach Anspruch 7, **dadurch gekennzeichnet, dass** der serielle Bus als I²C-Bus (131, 132) ausgebildet ist.

9. Messsystem nach mindestens einem der vorangehenden Ansprüche, **dadurch gekennzeichnet, dass** die Schalteinheit (31, 32) die mindestens eine Sensorleitung (123, 124) zur Kalibrierung des Messsystems (1) mit der Konfigurationseinheit (13) oder zur Regelung der Versorgungsspannung (Vp, Vn) mit der Versorgungsleitung (121, 122) verbindet.

10. Messsystem nach mindestens einem der vorangehenden Ansprüche, **dadurch gekennzeichnet, dass** ein Schaltsignal (VPROG, VSWITCH) die Schalteinheit (31, 32) schaltet.

11. Messsystem nach mindestens einem der vorangehenden Ansprüche, **dadurch gekennzeichnet, dass** eine separate Leitung (133) zur Übertragung des Schaltsignal (VPROG) an die Schalteinheit (31, 32) vorgesehen ist.

12. Messsystem nach mindestens einem der vorangehenden Ansprüche, **dadurch gekennzeichnet, dass** das Schaltsignal durch ein Programmierspannungssignal (VPROG) für die Konfigurationseinheit (13) des Messsystems (1) ausgebildet ist und eine Programmierspannungsleitung (133) vorgesehen ist, die mit der Konfigurationseinheit (13) und der Schalteinheit (31, 32) zur Übertragung des Programmierspannungssignals (VPROG)verbunden ist.

13. Messsystem nach Anspruch 12, **dadurch gekennzeichnet, dass** die Schalteinheit (31, 32) die mindestens eine Sensorleitung (123, 124) bei Anliegen des Programmierspannungssignals (VPROG) mit der Konfigurationseinheit (13) und bei Nichtanliegen des Programmierspannungssignals (VPROG) mit der mindestens einen Versorgungsleitung (121, 122) verbindet.

14. Messsystem nach Anspruch 10, **dadurch gekennzeichnet, dass** die mindestens eine Sensorleitung (123, 124) oder eine Versorgungsleitung (121, 122) zur Übertragung des Schaltsignals (VSWITCH) ausgebildet und vorgesehen ist.

15. Messsystem nach Anspruch 14, **dadurch gekennzeichnet, dass** die Versorgungsleitung (121, 122) zur Übertragung des Schaltsignals (VSWITCH) vorgesehen ist, wobei das Schaltsignal (VSWITCH) zur Übertragung auf die Versorgungsspannung (Vp, Vn) aufmoduliert ist.

16. Messsystem nach einem der Ansprüche 14 oder 15, **dadurch gekennzeichnet, dass** die Schalteinheit (31, 32) mit einem Schaltsignalwandler (33) verbunden ist, der mit der mindestens einen Sensorleitung (123, 124) oder der Versorgungsleitung (121, 123) verbunden ist und das über die mindestens eine Sensorleitung (123, 124) oder die Versorgungsleitung (121, 122) übertragene Schaltsignal (VSWITCH) zum Schalten der Schalteinheit (31, 32) auswertet.

17. Messsystem nach einem der vorangehenden Ansprüche, **dadurch gekennzeichnet, dass** die Schalteinheit (31, 32) als Analogschalter, als mechanischer Schalter oder als elektronischer Schalter, insbesondere MOSFET-Schalter ausgebildet ist.

## Claims

1. Measuring system for recording at least one measurement variable, having at least one sensor line which is provided as a sensing line for recording a state of the measuring system at a measurement point and for transmitting a sensor signal indicating the state to a control unit which can be connected to the measuring system, the sensor line constituting feedback via which the true signal present at the measurement point can be transmitted to the control unit,
**characterized by**
a switching unit (31, 32) which switches the at least one sensor line (123, 124) of the measuring system (1) in such a manner that, depending on the switching state of the switching unit (31, 32), it is used as a sensing line for transmitting the sensor signal (Sp, Sn) or as a data line for transmitting a data signal (CLOCK, DATA, SIN, COS, REF) which differs from the sensor signal (Sp, Sn).

2. Measuring system according to Claim 1, **characterized in that** the switching unit (31, 32) is designed and provided for the purpose of connecting the at least one sensor line (123, 124) to a supply line (121, 122) of the measuring system (1).

3. Measuring system according to Claim 2, **characterized in that** the sensor signal transmitted by the at least one sensor line (123, 124) is a supply voltage signal (Sp, Sn).

4. Measuring system according to at least one of the preceding claims, **characterized in that** the switching unit (31, 32) connects the at least one sensor line (123, 124) to a measuring unit (11) of the measuring system (1) and/or to a configuration unit (13) of the measuring system (1) for the purpose of transmitting a data signal.

5. Measuring system according to Claim 4, **characterized in that** the data signal transmitted by the at least one sensor line (123, 124) is a measurement signal (SIN, COS, REF) from the measuring unit (11) of the measuring system (1) and/or a bus signal (CLOCK, DATA) for calibrating the configuration unit (13) of the measuring system (1).

6. Measuring system according to either of Claims 4 and 5, **characterized in that**, on the basis of the switching state of the switching unit (31, 32), the at least one sensor line (123, 124) is either
- connected to the supply line (121, 122) for the purpose of transmitting a sensor signal (Sp, Sn)
or
- connected to the measuring unit (11) and/or to the configuration unit (13) for the purpose of transmitting a data signal (CLOCK, DATA, SIN, COS, REF).

7. Measuring system according to one of Claims 4 to 6, **characterized in that** the at least one sensor line (123, 124) constitutes a serial bus (131, 132) for connection to the configuration unit (13).

8. Measuring system according to Claim 7, **characterized in that** the serial bus is in the form of an I²C bus (131, 132).

9. Measuring system according to at least one of the preceding claims, **characterized in that** the switching unit (31, 32) connects the at least one sensor line (123, 124) to the configuration unit (13) for the purpose of calibrating the measuring system (1) or to the supply line (121, 122) for the purpose of regulating the supply voltage (Vp, Vn).

10. Measuring system according to at least one of the preceding claims, **characterized in that** a switching signal (VPROG, VSWITCH) switches the switching unit (31, 32).

11. Measuring system according to at least one of the preceding claims, **characterized in that** a separate line (133) for transmitting the switching signal (VPROG) to the switching unit (31, 32) is provided.

12. Measuring system according to at least one of the preceding claims, **characterized in that** the switching signal is formed by a programming voltage signal (VPROG) for the configuration unit (13) of the measuring system (1), and a programming voltage line (133) is provided and is connected to the configuration unit (13) and to the switching unit (31, 32) for the purpose of transmitting the programming voltage signal (VPROG).

13. Measuring system according to Claim 12, **characterized in that** the switching unit (31, 32) connects the at least one sensor line (123, 124) to the configuration unit (13) when the programming voltage signal (VPROG) is present and connects the at least one sensor line (123, 124) to the at least one supply line (121, 122) when the programming voltage signal (VPROG) is not present.

14. Measuring system according to Claim 10, **characterized in that** the at least one sensor line (123, 124) or a supply line (121, 122) is designed and provided for the purpose of transmitting the switching signal (VSWITCH).

15. Measuring system according to Claim 14, **characterized in that** the supply line (121, 122) is provided for the purpose of transmitting the switching signal (VSWITCH), the switching signal (VSWITCH) being modulated onto the supply voltage (Vp, Vn) for transmission.

16. Measuring system according to either of Claims 14 and 15, **characterized in that** the switching unit (31, 32) is connected to a switching signal converter (33) which is connected to the at least one sensor line (123, 124) or to the supply line (121, 123) and evaluates the switching signal (VSWITCH) transmitted via the at least one sensor line (123, 124) or the supply line (121, 122) for switching the switching unit (31, 32).

17. Measuring system according to one of the preceding claims, **characterized in that** the switching unit (31, 32) is in the form of an analogue switch, a mechanical switch or an electronic switch, in particular a MOSFET switch.

## Revendications

1. Système de mesure destiné à détecter au moins une grandeur de mesure, comportant au moins une ligne de capteurs qui est prévue sous la forme d'une ligne de détection pour détecter un état du système de mesure en un point de mesure et pour transmettre un signal de capteur indiquant ledit état à une unité de commande pouvant être connectée au système de mesure, dans lequel la ligne de capteurs présente un rétro-couplage par l'intermédiaire duquel le signal réel présent au point de mesure peut être transmis à l'unité de commande,
**caractérisé par**
une unité de commutation (31, 32) qui commute l'au moins une ligne de capteurs (123, 124) du système de mesure (1) de manière à ce qu'elle soit configurée en tant que ligne de détection destinée à transmettre le signal de capteur (Sp, Sn) ou en tant que ligne de données destinée à transmettre un signal de données (CLOCK, DATA, SIN, COS, REF) différant du signal de capteur (Sp, Sn) en fonction de l'état de commutation de l'unité de commutation (31, 32).

2. Système de mesure selon la revendication 1, **caractérisé en ce que** l'unité de commutation (31, 32) est réalisée et prévue pour connecter l'au moins une ligne de capteurs (123, 124) à une ligne d'alimentation (121, 122) du système de mesure (1).

3. Système de mesure selon la revendication 2, **caractérisé en ce que** le signal de capteur transmis par l'au moins une ligne de capteurs (123, 124) est un signal de tension d'alimentation (Sp, Sn).

4. Système de mesure selon au moins l'une des revendications précédentes, **caractérisé en ce que** l'unité de commutation (31, 32) connecte l'au moins une ligne de capteurs (123, 124) pour la transmission d'un signal de données à une unité de mesure (11) du système de mesure (1) et/ou à une unité de configuration (13) du système de mesure (1).

5. Système de mesure selon la revendication 4, **caractérisé en ce que** le signal de données transmis par l'au moins une ligne de capteurs (123, 124) est un signal de mesure (SIN, COS, REF) de l'unité de mesure (11) du système de mesure (1) et/ou un signal de bus (CLOCK, DATA) destiné à étalonner l'unité de configuration (13) du système de mesure (1).

6. Système de mesure selon l'une des revendications 4 ou 5, **caractérisé en ce que** l'au moins une ligne de capteurs (123, 124) est connectée soit
- à la ligne d'alimentation (121, 122) pour la transmission d'un signal de capteur (Sp, Sn), soit
- à l'unité de mesure (11) et/ou à l'unité de configuration (13) pour la transmission d'un signal de données (CLOCK, DATA, SIN, COS, REF).

7. Système de mesure selon l'une des revendications 4 à 6, **caractérisé en ce que** l'au moins une ligne de capteurs (123, 124) constitue un bus série (131, 132) pour la connexion à l'unité de configuration (13).

8. Système de mesure selon la revendication 7, **caractérisé en ce que** le bus série est réalisé sous la forme d'un bus I²C (131, 132).

9. Système de mesure selon au moins l'une des revendications précédentes, **caractérisé en ce que** l'unité de commutation (31, 32) connecte l'au moins une ligne de capteurs (123, 124), pour l'étalonnage du système de mesure (1), à l'unité de configuration (13), ou pour la régulation de la tension d'alimentation (Vp, Vn), à la ligne d'alimentation (121, 122).

10. Système de mesure selon au moins l'une des revendications précédentes, **caractérisé en ce qu'**un signal de commutation (VPROG, VSWITCH) commute l'unité de commutation (31, 32).

11. Système de mesure selon au moins l'une des revendications précédentes, **caractérisé en ce qu'**il est prévu une ligne séparée (133) pour la transmission du signal de commutation (VPROG) à l'unité de commutation (31, 32).

12. Système de mesure selon au moins l'une des revendications précédentes, **caractérisé en ce que** le signal de commutation est constitué par un signal de fonction de programmation (VPROG) destiné à l'unité de configuration (13) du système de mesure (1) et **en ce qu'**il est prévu une ligne de tension de programmation (133) qui est connectée à l'unité de configuration (13) et à l'unité de commutation (31, 32) pour la transmission du signal de tension de programmation (VPROG).

13. Système de mesure selon la revendication 12, **caractérisé en ce que** l'unité de commutation (31, 32) connecte l'au moins une ligne de capteurs (123, 124), lors de l'application du signal de tension de programmation (VPROG) à l'unité de configuration (13) et, lors de la non-application du signal de tension de programmation (VPROG), à l'au moins une ligne d'alimentation (121, 122).

14. Système de mesure selon la revendication 10, **caractérisé en ce que** l'au moins une ligne de capteurs (123, 124) ou l'au moins une ligne d'alimentation (121, 122) est réalisée et prévue pour la transmission du signal de commutation (VSWITCH).

15. Système de mesure selon la revendication 14, **caractérisé en ce que** la ligne d'alimentation (121, 122) est prévue pour la transmission du signal de commutation (VSWITCH), dans lequel le signal de commutation (VSWITCH) est surmodulé sur la tension d'alimentation (Vp, Vn) pour sa transmission.

16. Système de mesure selon l'une des revendications 14 ou 15, **caractérisé en ce que** l'unité de commutation (31, 32) est connectée à un convertisseur de signal de commutation (33) qui est connecté à l'au moins une ligne de capteurs (123, 124) ou à la ligne d'alimentation (121, 123) et qui évalue le signal de commutation (VSWITCH) transmis par l'intermédiaire de l'au moins une ligne de capteurs (123, 124) ou de l'au moins une ligne d'alimentation (121, 122) pour la commutation de l'unité de commutation (31, 32).

17. Système selon l'une des revendications précédentes, **caractérisé en ce que** l'unité de commutation (31, 32) est réalisée sous la forme d'un commutateur analogique, sous la forme d'un commutateur mécanique ou sous la forme d'un commutateur électronique, notamment d'un commutateur MOSFET.
